(19) Europäisches Patentamt

European Patent Office

Office européen des brevets

(11) EP 0 864 590 A2

(12) EUROPEAN PATENT APPLICATION

(43) Date of publication:
16.09.1998 Bulletin 1998/38

(51) Int. Cl.$^6$: C08F 12/24

(21) Application number: 97119193.7

(22) Date of filing: 03.11.1997

(84) Designated Contracting States:
AT BE CH DE DK ES FI FR GB GR IE IT LI LU MC NL PT SE
Designated Extension States:
AL LT LV MK RO SI

(30) Priority: 11.03.1997 JP 74405/97

(71) Applicant:
MARUZEN PETROCHEMICAL CO., LTD.
Chuo-ku, Tokyo 104 (JP)

(72) Inventors:
• Kaneko, Masao
Misato-shi, Saitama-ken (JP)
• Noguchi, Takeshi
Ichihara-shi, Chiba-ken (JP)
• Oka, Nobuyuki
Ichihara-shi, Chiba-ken (JP)

(74) Representative:
VOSSIUS & PARTNER
Siebertstrasse 4
81675 München (DE)

(54) **Process for preparing vinyl phenol polymers and stabilized compositions of vinyl phenol-containing polymerization raw material**

(57) Vinyl phenol polymers are useful materials having many applications. Vinyl phenol polymers possessing an appropriate molecular weight corresponding to each of the applications are desired. However, it is very difficult to control the molecular weight of vinyl phenol polymers, because vinyl phenol monomer exhibits a very high reaction rate in the presence of a radical initiator, and it is very difficult to obtain vinyl phenol polymers having molecular weight of from several thousands to one hundred and several tens of thousands. Further, vinyl phenol monomer is very difficult to store, because it is rapidly polymerize even at room temperature. A simple process for preparing vinyl phenol polymers having the molecular weight range mentioned above by simply adding methanol to the polymerization system is disclosed. A stabilized composition of vinyl phenol suitable for use to prepare vinyl phenol polymers, comprising vinyl phenol-containing polymerization raw material and methanol as the indispensable constituents is also disclosed.

EP 0 864 590 A2

## Description

The present invention relates to a process for preparing a vinyl phenol polymer and a stabilized composition of vinyl phenol-containing polymerization raw material.

More particularly the present invention relates to a process for preparing a vinyl phenol polymer by polymerising a vinyl phenol-containing polymerization raw material or copolymerizing this raw material with other copolymerizable vinyl compounds by using a radical initiator in the presence of methanol to ensure manufacture of a vinyl phenol polymer with a higher molecular weight. The present invention also relates to a stabilized composition of vinyl phenol-containing polymerization raw material to which methanol is added as an indispensable component to improve storage stability over an extended period of time. The stabilized composition is particularly suitable for conducting the process.

A vinyl phenol homopolymer possesses various types of reactivity and superior heat resistance inherent to a phenol polymer having phenolic hydroxyl groups. Vinyl phenol copolymers have additional characteristics which are not possessed by a vinyl phenol homopolymer, such as excellent adhesion water repellency reactivity derived from comonomers, and are useful as functional polymer materials. Specifically, these vinyl phenol polymers or copolymers are used in a wide variety of applications such as a microphotoresist material, a thermosetting resin, a metal surface treating agent, an ion exchange resin, a chelate resin, and various additives. Polymers possessing an appropriate molecular weight corresponding to each of these applications are desired. Generally, the polymers with a molecular weight (which herein means a weight average molecular weight unless otherwise specifically designated) of several thousands or more, especially from eight thousand to one hundred and several tens of thousands, are desired in the field of electronics, such as photoresist materials.

However, it is very difficult to control the molecular weight of vinyl phenol polymers, because high purity vinyl phenol monomer exhibits a very high reaction rate when subjected to homopolymerization or copolymerization with other vinyl compounds using a radical initiator. The reaction rate can be controlled only with difficulty. The reaction sometimes proceeds violently and recklessly. Therefore, several processes for polymerizing vinyl phenol monomer while controlling the polymerization reaction have been proposed, such as a process of polymerizing a crude vinyl phenol raw material containing phenolic impurities without purification (JP-A-53-13694 (1978)) or a process of copolymerizing vinyl phenol and an acrylic monomer or a styrene monomer in the presence of a phenol compound possessing no unsaturated side chain and water (JP-A-61-291606 (1956) and JP-A-63-130604 (1988)) . Although these processes can produce vinyl phenol polymers with a close-to-target molecular weight with improved reproducibility of the molecular weight, the results are not always satisfactory. Rather, there are cases where the molecular weight of the polymer decreases due to a decrease in the vinyl phenol concentration by dilution of the vinyl phenol monomer with other components. Specifically, under the polymerization conditions where the vinyl phenol monomer concentration is low, it is difficult to produce a polymer with a high molecular weight since the monomer concentration is low. In addition, because the vinyl phenol monomer produces a polymer with a high molecular weight only with difficulty as compared with other common vinyl compounds, producing a high molecular weight polymer is particularly difficult even in the case of copolymerization using a high proportion of vinyl phenol to a vinyl compound used as a comonomer.

JP-A-51-96882 (1976) discloses a process for controlling the molecular weight of a vinyl phenol polymer by causing a compound possessing an alcoholic hydroxyl group to be present when vinyl phenol is polymerized. However, this process has an object of obtaining a polymer with a molecular weight of from several hundreds to several thousands at most, using the action of the compound having the alcoholic hydroxyl group to reduce the molecular weight of the polymers. In addition, the process disclosed in the reference concerns with thermal polymerisation. According to R. H. Still et al (J. Appl. Polymer Sci., Vol. 21, 1199 -1213 (1977)) , the thermal polymerisation of vinyl phenol is a cationic polymerization caused by inter-molecular or intra-molecular transfer of protons. Copolymerizability with acrylic monomers or styrenic monomers is generally inferior according to such cationic polymerisation in comparison with radical polymerization. Moreover, the randomness of the resulting copolymers is poor. Thus, the process disclosed in the reference has these basic problems.

In addition to the above, a vinyl phenol monomer which is a raw material for preparing a vinyl phenol polymer or copolymer is very unstable. A high purity vinyl phenol monomer is easily polymerised while stored even at room temperature. The vinyl phenol monomer containing such partly polymerized materials is thus inappropriate as a raw material for polymerization or copolymerization as is. Therefore, a high purity vinyl phenol monomer must conventionally be stored under refrigeration at a temperature of lower than 5°C, preferably lower than -20°C. Thus, storing the monomer for manufacturing vinyl phenol polymer in an industrial scale has been difficult. JP-B-51-29137 (1976) discloses a composition comprising alkenyl phenols and at least one selected from the group of alcohol compounds and phenol compounds to stabilize the monomer mixture. The effect of stabilization obtained by the process disclosed in the reference, however, is quite insufficient. As can be seen from the examples given in the reference, the effect only continues for something over ten hours, at most. Thus, instability of the vinyl phenol monomer has imposed a significant restriction in the industrial manufacture of vinyl phenol polymers.

An object of the present invention is to provide a process for manufacturing a vinyl phenol polymer or vinyl phenol copolymer with a molecular weight of from ten thousand to one hundred and several tens of thousands economically at a high yield with excellent reproducibility, even when wide polymerization conditions are adopted, such as the case where the concentration of the vinyl phenol monomers is low or the ratio of vinyl phenol monomers contained in the mixture of monomers to be copolymerized is high.

Another object of the present invention is to provide a composition for preparing vinyl phenol polymers, i.e. a composition of vinyl phenol-containing polymerization raw material, which can be stored for a long period of time, even at a relatively high temperature, e.g. room temperature, in large quantities in the industrial scale manufacture of vinyl phenol polymers or copolymers.

These objects have been achieved by the surprising finding that a vinyl phenol polymer or copolymer with a molecular weight higher than that of vinyl phenol polymers or copolymers conventionally prepared can be easily manufactured with excellent reproducibility and at a high yield by causing methanol to be present in the reaction system.

It has further been found that the storage stability of raw materials for vinyl phenol polymerization, and especially the storage stability of raw materials for vinyl phenol polymerization obtained by various vinyl phenol preparing processes can be remarkably improved if methanol is present, that the degree of the stabilization improvement is greater than that achieved by the composition of the above-mentioned JP-B-51-29137 (1976) , and that it is possible to produce polymers having a higher molecular weight range than that conventionally obtained.

In a polymerization using a radical initiator, in general, a chain transfer agent is added as a molecular weight regulator. In such a case, the molecular weight of the resulting polymer is degreased. That is to say, almost no molecular weight regulator having the effect to increase the molecular weight of the resulting polymer is known in the art. Thus, the effect of increasing the molecular weight of the resulting polymer by the addition of methanol mentioned above is an unexpectable one.

Thus, the gist of the first invention resides in a process for preparing a vinyl phenol polymer or copolymer by polymerizing a vinyl phenol-containing polymerization raw material or copolymerizing a vinyl phenol-containing polymerization raw material with at least one vinyl compound which is copolymerizable with vinyl phenol by using a radical initiator, characterized in that the polymerization or copolymerization is conducted in the presence of methanol, and the gist of the second invention resides in a stabilized composition for preparing vinyl phenol polymer or copolymer by using a radical initiator which comprises a vinyl phenol-containing polymerization raw material and methanol as the indispensable constituents.

According to the process of the present invention, the molecular weight of the vinyl phenol polymer or vinyl phenol copolymer can be increased to from ten thousand to one hundred and several tens of thousands by causing methanol to be present in the polymerization reaction system, even when the concentration of the vinyl phenol monomers is low or the ratio of vinyl phenol monomers contained in the monomer mixture to be copolymerized is high. In contrast, if the polymerization is carried out in a similar reaction system but in the absence of methanol, the molecular weight of the resulting polymer or copolymer is about half that of the polymer manufactured in the presence of methanol, i.e. by the process of the present invention. If the polymerization temperature is lowered or the concentration of the polymerization initiator is reduced in an attempt to obtain a vinyl phenol polymer or copolymer with the molecular weight equivalent to that obtainable by the present invention, there will be problems such as decrease in the yield of polymers or copolymers. As stated above, the addition of methanol in the radical polymerization of the present invention has the effect of increasing the molecular weight of the resulting polymer. This is a quite unexpected result in view of the molecular weight reducing effect of the alcoholic hydroxyl group-containing compound in the thermal polymerization described in the JP-A-51-96882 (1976) aforementioned. It is also to be noted that in the present invention, though methanol acts as if a polymerization inhibitor or polymerization retardor thereby giving a stabilization effect to the vinyl phenol-containing polymerization raw material, polymer yield can be increased by the addition of methanol.

The "vinyl phenol-containing polymerization raw material" used in the present invention includes a broad range of compositions, such as vinyl phenol monomer, monomer mixtures of vinyl phenol isomers, mixtures containing these monomers or monomer mixtures, and reaction products such as unpurified products obtained in various processes for manufacturing vinyl phenol. More particularly, vinyl phenol monomer used in the present invention may be an o-isomer, m-isomer, or p-isomer, or mixtures of these isomers. Products of vinyl phenol manufactured by various processes is fall within the definition of the vinyl phenol-containing polymerization raw material. Specific examples of such vinyl phenol manufacturing processes include a process obtaining vinyl phenol from phenol via acetoxyphenyl methyl carbinol, a process comprising decarboxylation of hydroxycinnamic acid, a process comprising decomposition of bisphenol ethane, and a process comprising dehydrogenation of ethyl phenol. According to some of these processes for manufacturing vinyl phenol, the product contains unreacted raw materials, a diluent used in the reaction, and, as side-products of the reaction, either phenolic compounds or a mixture of phenolic compounds and water. These crude reaction products obtained from vinyl phenol preparation processes may be used for the manufacture of vinyl phenol polymer, as is, without separating such phenolic compounds and water from the crude products. Specifically, crude reaction products containing side-products, such as a reaction product including phenolic compounds and water, or a partially purified material obtained by the partial purification of such a reaction product, are more desirable as a vinyl phenol-containing polymerization raw material in view of both the low cost and appropriate properties as a raw material for polymerization of vinyl phenol. A crude reaction product or a partially purified reaction product obtained by a dehydrogenation reaction of ethyl phenol is the most preferable vinyl phenol-containing polymerization raw material to be used in the present invention.

Various radically polymerizable vinyl monomers can be used as vinyl compounds for copolymerizing with vinyl phenol in the present invention. Acrylic monomers and styrenic monomers are particularly desirable. As acrylic monomers, acrylic acid, methacrylic acid, esters and amides of these, acrylonitrile, methacrylonitrile, and the like can be given. As examples of styrenic monomers, styrene, vinyl toluene, bromostyrene, chlorostyrene, and the like can be given.

Specific examples of acrylic monomers include acrylic esters, such as methyl acrylate, ethyl acrylate, n-propyl acrylate, i-propyl acrylate, n-butyl acrylate, i-butyl acrylate, t-butyl acrylate, 2-ethylhexyl acrylate, stearyl acrylate, tetrahydrofurfuryl acrylate, cyclohexyl acrylate, benzyl acrylate, 2-hydroxyethyl acrylate, 2-hydroxypropyl acrylate, 2-methoxyethyl acrylate, 2-ethoxyethyl acrylate, 2-butoxyethyl acrylate, 2-phenoxyethyl acrylate, ethoxydiethylene glycol acrylate, phenoxydiethylene glycol acrylate, dicyclopentenyl acrylate, dicyclopentenyloxyethyl acrylate, 1-methoxycyclododecadienyl acrylate, 2,6-dibromo-4-t-butylphenyl acrylate, trifluoroethyl acrylate, tetrafluoropropyl acrylate, octafluoropentyl acrylate, heptadecafluorodecyl acrylate, and isobornyl acrylate; esters of methacrylic acid such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, n-dodecyl methacrylate, n-octadecyl methacrylate, tetrahydrofurfuryl methacrylate, cyclohexyl methacrylate, benzyl methacrylate, 2-hydroxyethyl methacrylate, 2-hydroxypropyl methacrylate, polyethylene glycol methacrylate, polypropylene glycol methacrylate, glycerol methacrylate, methoxypolyethylene glycol methacrylate, 3-chloro-2-hydroxypropyl methacrylate, dimethylaminoethyl methacrylate, diethylaminoethyl methacrylate, 3-trimethoxysilylpropyl methacrylate, 2-(diphenylphosphoxy)ethyl methacrylate, 3-chloro-(2-acidphosphoxy)propyl methacrylate, trifluoroethyl methacrylate, tetrafluoropropyl methacrylate, octafluoropentyl methacrylate, heptadecafluorodecyl methacrylate, and isobornyl methacrylate; polyfunctional acrylic acid esters such as 1,4-butanediol diacrylate, dimethylol tricyclodecane diacrylate, pentaerythritol triacrylate, and tris(acryloyloxyethyl) phosphate; polyfuctional methacrylic acid esters such as ethylene glycol dimethacrylate and tris(methacryloyloxyethyl) isocyanurate; and amides such as acrylamide and methacryl amide. These vinyl compounds may be used individually for binary copolymerization with vinyl phenol, or two or more of these unsaturated compounds may be used in combination to effect multi-component copolymerization with vinyl phenol.

The ratio of vinyl phenol and other vinyl compounds used in the copolymerization is not particularly limited, and can be suitably selected according to the ratio of composition, i.e. the ratio of vinyl phenol unit and vinyl compound unit, desired for the target copolymer, copolymerization reactivity ratio of vinyl phenol and the vinyl compound used, and the like.

In the case where the polymerization is carried out in the presence of a phenolic compound as mentioned above, nonpolymerizable phenolic compounds such as, for example, phenol, cresol, xylenol, ethylphenol, propylphenol, and butylphenol, are preferred. A preferred amount of these non-polymerizable phenolic compounds in the vinyl phenol-containing polymerization raw material is usually 3 to 97 wt.%. In the case where these non-polymerizable phenolic compounds are intentionally added, the amount to be added should be such that the resulting proportion falls within this range.

When the effects of water in the present invention is utilized by adding water to the raw material, except for the case where water is already contained in the raw material, the water should preferably be free of impurities such as metal ion, because the resulting polymer may be used for applications in the electronic field. Usually, ion-exchanged water or distilled water is used. The amount of water is usually less than 70 wt.%, and preferably 1 to 30 wt.%, for the total amount of vinyl phenol and other vinyl compounds.

With regard to methanol used in the present invention, methanol meeting a common industrial grade is sufficient for use, although it is desirable that the content of impurities such as metal ions in methanol be minimal taking into consideration the fact that the resulting polymer may be used for applications ill the electronic field. The amount of methanol used is in the range of 1 to 500 wt.%, preferably 3 to 300 wt.%, and more preferably 3 to 150 wt.%, for the total amount of the raw material excepting methanol in the reaction system. If the amount of methanol is smaller than 1 wt.%, the effect of the present invention may not be sufficiently achieved; if the amount exceeds 500 wt.%, on the other hand, a decrease in the molecular weight of the resulting polymer due to the low monomer concentration in the reaction system is conspicuous.

It is to be noted that the effect of the present invention can only be realized by the use of methanol. No other polar substances, including other alcohols such as ethanol, acetone, tetrahydrofuran, or ethers, can bring about the effect of the present invention. In other words, the effect exhibited by the presence of methanol in the present invention is not identical to the molecular weight increasing effect as can be seen when the polymerization reaction is carried out at a lower temperature resulting from the use of a low boiling point solvent such as ethanol or acetone under atmospheric pressure. The effect also differs from that brought about by the reduction in the concentration of a polymerization initiator by diluting the raw material with a solvent.

4

Given as examples of radical initiators used in the present invention are benzoyl peroxide, acetyl peroxide, t-butyl peroxide, dibenzoyl disulfide, azobisisobutylonitrile, dimethyl 2,2'-azobisisobutyrate, 2,2'-azobis(4-methoxy-2,4-valeronitrile), and the like. Of these, particularly preferred are azobisisobutylonitrile and dimethyl 2,2'-azobisisobutyrate. The amount of radical initiators used is in the range of 0.1 - 10 wt.%, preferably 0.5 - 5 wt.%, for the total amount of raw materials other than the radical initiator in the reaction system. The total amount of radical initiators may be added at the start of the polymerization reaction, or a part of the radical initiators may be added at the start, with the remaining portion being added intermittently or continuously as the reaction progresses.

A solvent may be used when carrying out the present invention as required. Given as examples of the solvent which can be added are acetone, methyl ethyl ketone ethyl acetate, butyl acetate, ethanol, propanol, butanol, tetrahydrofuran, dioxane and the like. Aromatic solvents such as benzene, toluene, xylene are also usable. The amount of solvent used can be suitably determined according to the kind and molecular weight of the target polymer, without any specific limitations.

The polymerization reaction temperature in the present invention is 40 - 150°C, preferably 60 - 120°C. If the reaction temperature is lower than 40°C, the yield of the resulting polymer is markedly decreased; if higher than 150°C, not only it is difficult to obtain a polymer having the target high molecular weight, but also there is a tendency for the color of the resulting polymer to be impaired. The reaction time is usually in the range of 10 minutes to 5 hours, preferably from 30 minutes to 3 hours. The polymerization reaction is usually carried out under atmospheric pressure although the reaction under an increased pressure or under a reduced pressure is acceptable. The polymerization operation can be carried out either in a batch process or a continuous process.

After the polymerization reaction, the polymer can be recovered by removing methanol, unreacted monomers, phenol compounds, water, solvents, and the like from the reaction mixture by solvent precipitation, thin film evaporation, or any other optional method. Beside the methods of recovering the target polymer as a solid by completely removing these volatile components, it is possible to leave part of the solvent and recover the polymer in a liquid form according to the application in which the product is used.

The vinyl phenol polymer obtained in the present invention is a polymer possessing a linear structure and a molecular weight usually from about ten thousand to a hundred and several tens of thousands. The polymer structure may be partially cross-linked such as in the case where a polyfunctional monomer is used as a comonomer component. The polymer obtained by the process of the present invention possesses not only the characteristics inherent to a vinyl phenol polymer, but also other characteristics such as various types of reactivity, adhesion properties, hydrophilic properties, oleophilic properties, water repellency, corrosion resistance, antistatic properties, thermosetting properties, UV curability, cross-linking properties, flame retardancy, and the like which originate from types of vinyl compounds used together, the composition of monomers, and the molecular weight.

The vinyl phenol polymer obtainable by the process of the present invention can be used in various applications such as a microphotoresist, PS plate for printing, etching resist for printed circuit substrates, solder resist, color filter, micro lens, laminated board, mold material, coating material, adhesive, ink, metal surface treating agent, flocculant, antistatic agent, and fiber treating agent.

As mentioned before, the present invention also relates to a composition of vinyl phenol-containing polymerization raw material with improved stability. The composition comprises vinyl phenol-containing polymerization raw material and methanol as indispensable constituents. The stabilizing effect can be recognized even at a wide ratio of methanol to the vinyl phenol-containing polymerization raw material, or to the total amount of vinyl phenol-containing polymerization raw material arid vinyl compound when vinyl compound is included within the stabilized composition, in the range of 1 - 500 wt.%, it is preferable to use a ratio in the range of 3 - 300 wt.%, and it is particularly preferable to use a ratio in the range of 3 - 150 wt.%. In the case where the vinyl phenol-containing polymerization raw material contains non-polymerizable phenol compounds, such as phenol arid alkyl substituted phenol compounds, and water, besides vinyl phenol, in the stabilized composition, the weight ratio (vinyl phenol):(methanol):(phenolic compounds):(water) is preferably 1:0.03-20:0.01-20:0.01-5 and more preferably 1:0.1-10:0.05-5:0.03-2. If a crude reaction product or a partially purified reaction product obtained by a dehydrogenation reaction of ethyl phenol is used, the raio specified above can easily be satisfied by simply adding an appropriate amount of methanol to the crude reaction product or the partially furified reaction product.

When the composition of vinyl phenol-containing polymerization raw material is stored, a conventional container or a storage tank riot equipped with a refrigerator can be used without any problem. A storage temperature in the range of 0 - 60°C, preferably 10 - 50°C, can be employed. However, storage at room temperature is advantageous in practice.

When vinyl phenol is homo-polymerized or copolymerized with other components, it is of course possible to use the composition of vinyl phenol-containing polymerization raw material with increased stability as is. Thus, not only a vinyl phenol monomer, which has conventionally been stored only with difficulty, can be stored for a long period of time in a stable state, but also the stored composition can be directly used as a raw material for the polymerization because the composition contains essentially no polymerized material even after stored for a long term. A series of processes can thus be carried out conveniently and economically.

By the process of the present invention, when vinyl phenol is homopolymerized or copolymerized with other components, a vinyl phenol polymer with a molecular weight higher than that of vinyl phenol polymers conventionally prepared can be easily manufactured with excellent reproducibility by causing methanol to be present in the reaction system.

When it is intended to store vinyl phenol monomers for a long period of time in a stable state, the object can easily be achieved by the use of the stabilized composition of vinyl phenol-containing polymerization raw material of the present invention.

By using the composition of vinyl phenol-containing polymerization raw material of the present invention directly as polymerization raw material, a process for preparing vinyl phenol polymers can thus be carried out conveniently and economically as a series of processes.

The present invention will now be explained more specifically by way of examples, which shall not be construed as limiting the present invention. In the following examples and comparative examples, percent (%) indicates percent on weight basis (wt.%).

Example 1

15 g of methanol was added to and dissolved in a mixture of 54.0 g of a vinyl phenol-containing polymerization raw material obtained by dehydrogenation of p-ethyl phenol (ingredients: 17 g of p-vinyl phenol, 28.6 g of p-ethyl phenol, 1.5 g of p-cresol, 0.4 g of phenol, and 6.5 g of water), and 27 g of t-butyl acrylate. To the resulting solution was added 0.50 g of azobisisobutylonitrile (AIBN) as a radical initiator arid the mixture was heated for two hours at 100°C. The molar ratio of p-vinyl phenol arid t-butyl acrylate in the mixture was 33:67. The reaction product was charged into a mixture of toluene and hexane, and the resulting precipitate was dissolved in methanol. The solution obtained was again charged into the mixture of toluene and hexane.

The precipitate produced was collected and dried under a reduced pressure to obtain 38.6 g of a polymer. The yield of the polymer on the total amount of p-vinyl phenol and t-butyl acrylate was 87.7 %. The molecular weight of the polymer was measured by gel permeation chromatography (GPC) to confirm that the weight average molecular weight (Mw) was 75,500 and the number average molecular weight (Mn) was 33,000. This polymer was analyzed by the $^{13}$C-NMR spectroscopy and IR spectroscopy to identify that the polymer was a copolymer of p-vinyl phenol and t-butyl acrylate. From the peak area ratio of $^{13}$C-NMR spectrum, the ratio of p-vinyl phenol (m) and t-butyl acrylate (n) in the copolymer was calculated to be m/n=42/58 (molar ratio). This polymer was soluble in water, methanol, acetone and tetrahydrofuran and insoluble in toluene and hexane.

Comparative Example 1

Copolymerization of p-vinyl phenol and t-butyl acrylate was carried out under the same conditions as in Example 1, except that the addition of methanol was omitted and the amount of AIBN used was 0.42 g (the same ratio (0.52 %) to the amount of other raw materials as in Example 1) . The reaction product was processed in the same mariner as in Example 1 to obtain 36.4 g of a copolymer at a yield of 82.8%. The molecular weight of the polymer was measured by GPC to find that the weight average molecular weight (Mw) was 39,200 arid the number average molecular weight (Mn) was 17,500. This polymer was analyzed by the $^{13}$C-NMR spectroscopy and IR spectroscopy to identify that the polymer was a copolymer of p-vinyl phenol and t-butyl acrylate. From the peak area ratio of $^{13}$C-NMR spectrum, the ratio of p-vinyl phenol (m) and t-butyl acrylate (n) in the copolymer was calculated to be m/n=41/59 (molar ratio).

Example 2

A copolymerization reaction and post-treatments were carried out in the same manner as in Example 1 except that the amount of t-butyl acrylate used was changed to 24 g and the amount of AIBN used was changed to 0.65 g.

The term "post-treatments" used herein means following successive treatments: The polymerization product was charged into a mixture of toluene and hexane, and the resulting precipitate was dissolved in methanol. The solution obtained was again charged into the mixture of toluene and hexane. The precipitate produced was collected and dried under a reduced pressure.

Thus, 33.7 g (yield: 82.1%) of a copolymer was obtained. The copolymer had a weight average molecular weight (Mw) of 40,000.

Comparative Example 2

A copolymerization reaction and post-treatments were carried out in the same manner as in Example 2 except that methanol was not used and the amount of AIBN used was-changed to 0.55 g. Thus, 30.2 g (yield: 73.5%) of a copolymer was obtained. The copolymer had a weight average molecular weight (Mw) of 24,100.

Example 3

A copolymerization reaction and post-treatments were carried out in the same manner as in Example 1 except that the amount of t-butyl acrylate used was changed to 11 g and the amount of AIBN used was changed to 0.65 g. Thus, 25.2 g (yield: 91.2%) of a copolymer was obtained. The copolymer had a weight average molecular weight (Mw) of 21,300.

Comparative Example 3

A copolymerization reaction and post-treatments were carried out in the same manner as in Example 3 except that methanol was not used and the amount of AIBN used was changed to 0.53 g. Thus, 23.6 g (yield: 85.2%) of a copolymer was obtained. The copolymer had a weight average molecular weight (Mw) of 13,200.

Comparative Example 4

A copolymerization reaction arid post-treatments were carried out in the same manner as in Example 3 except that 15 g of ethanol was used instead of methanol. Thus, 23.4 g (yield: 83.7%) of a copolymer was obtained. The copolymer had a weight average molecular weight (Mw) of 14,400.

From the above, it is apparent that when ethanol is used instead of methanol, a copolymer having a lower weight average molecular weight is formed comparing to a copolymer obtainable by the use of methanol. Rather, it can be judged that the addition of ethanol gives substantially no improvement over the result obtained in Comparative Example 3 in which no methanol is used.

Comparative Example 5

A copolymerization reaction and post-treatments were carried out in the same manner as in Example 3 except that 15 g of acetone was used instead of methanol. Thus, 22.1 g (yield: 78.9%) of a copolymer was obtained. The copolymer had a weight average molecular weight (Mw) of 13,500.

From the above, it is apparent that when acetone is used instead of methanol, a copolymer having a lower weight average molecular weight is formed. Rather, it can be judged that the addition of acetone gives substantially no improvement over the result obtained in Comparative Example 3 in which no methanol is used.

Examples 4 - 8 and Comparative Examples 6 - 9

Many experiments shown in Table 1 were carried out by using the vinyl phenol-containing polymerization raw material used in Example 1. In the Table, the amount of vinyl phenol-containing polymerization raw material used is shown in terms of the amount of p-vinyl phenol contained in the polymerization raw material used. In the experiments, the effect of methanol was examined by changing the kinds of comonomers and the amounts of vinyl phenol-containing polymerization raw material used. Detailed polymerization conditions used and the results obtained thereby were shown in Table 1. Example 8 and Comparative Example 9 show the results of vinyl phonol homopolymerization by using the vinyl phenol-containing polymerization raw material as the sole polymerizable material.

Table 1a

| | Ex.1 | C.Ex.1 | Ex.2 | C.Ex.2 | Ex.3 | C.Ex.3 |
|---|---|---|---|---|---|---|
| p-vinyl phenol (g) | 17 | 17 | 17 | 17 | 17 | 17 |
| TBA [1] (g) | 27 | 27 | 24 | 24 | 11 | 11 |
| Styrene (g) | — | — | — | — | — | — |
| MMA [2] (g) | — | — | — | — | — | — |
| AIBN [3] (g) | 0.50 | 0.42 | 0.65 | 0.55 | 0.65 | 0.53 |
| AIBN [3] (wt.%) | 0.52 | 0.52 | 0.70 | 0.70 | 0.82 | 0.82 |
| Methanol (g) | 15.0 | — | 15.0 | — | 15.0 | — |
| Mw [4] | 75,500 | 39,200 | 40,000 | 24,100 | 21,300 | 13,200 |
| Composition of monomers charged (p-VP mol.%) [5] | 33 | 33 | 43 | 43 | 63 | 63 |
| p-VP content of copolymer formed (p-VP mol.%) | 42 | 41 | 49 | 50 | 61 | 63 |
| Amount of copolymer formed (g) | 38.6 | 36.4 | 33.7 | 30.2 | 25.2 | 23.6 |
| Yield of copolymer (%) | 87.7 | 82.8 | 82.1 | 73.5 | 91.2 | 85.2 |
| C.Ex.: Comparative Example | | | | | | |

[1]: t-butyl acrylate;
[2]: methyl methacrylate;
[3]: azoisobutyronitrile;
[4]: weight average molecular weight;
[5]: (moles of p-VP charged/moles of total monomers charged) x 100

Table 1b

| | C.Ex.4 | C.Ex.5 | Ex.4 | C.Ex.6 | Ex.5 | Ex.6 |
|---|---|---|---|---|---|---|
| p-vinyl phenol (g) | 17 | 17 | 17 | 17 | 17 | 17 |
| TBA [1] (g) | 11 | 11 | 24 | 24 | — | — |
| Styrene (g) | — | — | — | — | — | — |
| MMA [2] (g) | — | — | — | — | 9 | 9 |
| AIBN [3] (g) | 0.65 | 0.53 | 1.30 | 1.09 | 0.65 | 0.49 |
| AIBN [3] (wt.%) | 0.81 | 0.81 | 1.40 | 1.40 | 0.83 | 0.83 |
| Methanol (g) | (ethanol) 15.0 | (acetone) 15.0 | 15.0 | — | 15.0 | 5.0 |
| Mw [4] | 14,400 | 13,500 | 32,200 | 18,000 | 22,800 | 18,100 |
| Composition of monomers charged (p-VP mol.%) [5] | 60 | 60 | 43 | 43 | 61 | 61 |
| p-VP content of copolymer formed (p-VP mol.%) | 60 | 61 | 45 | 50 | 61 | 59 |
| Amount of copolymer formed (g) | 23.4 | 22.1 | 35.0 | 31.4 | 15.3 | 14.5 |
| Yield of copolymer (%) | 83.7 | 78.9 | 85.4 | 76.6 | 89.8 | 85.1 |
| C.Ex.: Comparative Example | | | | | | |

[1]: t-butyl acrylate;

2): methyl methacrylate;
3): azoisobutyronitrile;
4): weight average molecular weight;
5): (moles of p-VP charged/moles of total monomers charged) x 100

Table 1c

|  | C.Ex.7 | Ex.7 | C.Ex.8 | Ex.8 | C.Ex.9 |
|---|---|---|---|---|---|
| p-vinyl phenol (g) | 17 | 11 | 11 | 17 | 17 |
| TBA [1] (g) | — | — | — | — | — |
| Styrene (g) | — | 6 | 6 | — | — |
| MMA [2] (g) | 9 | — | — | — | — |
| AIBN [3] (g) | 0.45 | 0.58 | 0.47 | 0.30 | 0.23 |
| (wt.%) | 0.83 | 0.88 | 0.88 | 0.43 | 0.43 |
| Methanol (g) | — | 12.0 | — | 15.0 | — |
| Mw [4] | 10,600 | 10,200 | 6,300 | 11,200 | 5,800 |
| Composition of monomers charged (p-VP mol.%) [5] | 61 | 62 | 62 | 100 | 100 |
| p-VP content of copolymer formed (p-VP mol.%) | 58 | 61 | 60 | 100 | 100 |
| Amount of copolymer formed (g) | 14.0 | 8.8 | 7.9 | 12.9 | 11.1 |
| Yield of copolymer (%) | 82.3 | 78.8 | 70.1 | 75.8 | 65.0 |
| C.Ex.: Comparative Example | | | | | |

1): t-butyl acrylate;
2): methyl methacrylate;
3): azoisobutyronitrile;
4): weight average molecular weight;
5): (moles of p-VP charged/moles of total monomers charged) x 100

Table 1 shows following facts: (1) Molecular weight of polymers can be increased by the addition of methanol in the reaction system both in the case of copolymerization and homopolymerization (comparison of the results obtained in Examples and corresponding Comparative Examples) . (2) A significant molecular weight increasing effect is given only by the use of methanol (Example 3 vs. Comparative Examples 4, 5, and Comparative Example 3 vs. Comparative Examples 4, 5) . (3) When a larger amount of methanol is used, copolymer having a higher molecular weight can be formed (Examples 5, 6 vs. Comparative Example 7) . (4) By the addition of methanol, polymer yield is increased (comparison of examples and corresponding comparative examples) . (5) In a case of copolymerization of vinyl phenol (p-VP) and other vinyl compound, e.g. TBA, molecular weight of copolymer is increased according to the decrease of p-VP/TBA ratio (Examples 1 - 3) . Accordingly, molecular weight of vinyl phenol homopolymer obtained in Example 8 is lower than those obtained in Examples 1 - 3, nevertheless the molecular weight obtained in Example 8 still satisfies the target molecular weight range of from ten thousand to one hundred and several tens of thousands. (6) When a larger amount of radical initiator, i.e. AIBN, is used, copolymer having a lower molecular weight is formed (Example 2 vs. Example 4) .

Example 9 (Test for determining the effect to stabilize vinyl phenol monomers by the addition of methanol)

To a dehydrogenation reaction product of p-ethyl phenol (composition: p-vinyl phenol 40. 3%, p-ethyl phenol 46.4%, p-crezole 2.2%, phenol 1.7%, water 9.4%), 20% of methanol was added to give methanol concentration of 16.7% to the mixed composition. The mixed composition was kept stand at room temperature and the amount of polymerised materials thus formed were measured. The amount of polymerized materials are shown on the basis of p-vinyl phenol contained in the dehydrogenation reaction product of p-ethyl phenol. The relationship between the amount of polymerised materials formed and days stored was as follows:

| Days stored | 10 | 30 | 60 | 100 | 200 |
|---|---|---|---|---|---|
| Polymerized materials (wt.%) | < 0.05 | 0.26 | 0.47 | 0.75 | 1.61 |

Comparative Example 10

An experiment was carried out in the same manner as in Example 9 except that methanol was not added. The results thus obtained were shown below:

| Days stored | 0.5 | 1 | 2 | 4 | 10 |
|---|---|---|---|---|---|
| Polymerized materials (wt.%) | 1.1 | 2.4 | 4.9 | 12.5 | 21.7 |

When comparing the results of Example 9 and Comparative Example 10, it is apparent that a significant stabilization effect on vinyl phenol monomers can be obtained by the addition of methanol.

**Claims**

1. A process for preparing a vinyl phenol polymer or copolymer by polymerizing a vinyl phenol-containing polymerization raw material or copolymerising a vinyl phenol-containing polymerization raw material with at least one vinyl compound which is copolymerizable with vinyl phenol by using a radical initiator, characterized in that the polymerisation or copolymerization is conducted in the presence of methanol.

2. The process according to Claim 1, wherein said polymer or copolymer has weight average molecular weight of from ten thousand to one hundred and several tens of thousands.

3. The process according to Claim 1 or Claim 2, wherein said vinyl phenol-containing polymerization raw material comprises vinyl phenol, non-polymerizable phenols and water.

4. The process according to Claim 1 or Claim 2, wherein said vinyl phenol-containing polymerization raw material comprises vinyl phenol, non-polymerizable phenols and water, and is a crude reaction product or a partially purified reaction product obtained by dehydrogenation of ethyl phenol.

5. The process according to any one of Claims 1 - 4, wherein the amount of methanol is 3 - 150 wt . % based on the total amount of the vinyl phenol-containing polymerization raw material and said vinyl compound.

6. The process according to Claim 3 or Claim 4, wherein the amount of methanol used is to satisfy a weight ratio of (vinyl phenol):(methanol):(phenolic compounds):(water) of 1:0.03-20:0.01-20:0.01-5.

7. A stabilized composition for conducting the process defined in any one of Claims 1 - 3 which comprises said vinyl phenol-containing polymerization raw material and methanol as the indispensable constituents.

8. The stabilized composition according to Claim 7, for conducting the process defined in Claim 4, wherein said vinyl phenol-containing polymerization raw material comprises vinyl phenol, non-polymerizable phenols and water, and is a crude reaction product or a partially purified reaction product obtained by dehydrogenation of ethyl phenol.

9. The stabilized composition according to Claim 7 or Claim 8, for conducting the process defined in Claim 5, wherein the amount of methanol is 3 - 150 wt.% based on the total amount of said vinyl phenol-containing polymerization raw material and said vinyl compound.

10. The stabilized composition according to Claim 8, for conducting the process defined in Claim 6, wherein the weight ratio of (vinyl phenol):(methanol):(phenolic compounds):(water) is 1:0.03-20:0.01-20:0.01-5.

11. A stabilized composition for preparing vinyl phenol polymer or copolymer by using a radical initiator which comprises a vinyl phenol-containing polymerization raw material and methanol as the indispensable constituents.

12. The stabilized composition according to Claim 11, wherein said vinyl phenol-containing polymerization raw material comprises vinyl phenol, non-polymerizable phenols and water, and is a crude reaction product or a partially purified reaction product obtained by dehydrogenation of ethyl phenol.

13. The stabilized composition according to Claim 11 or Claim 12, wherein the amount of methanol is 3 - 150 wt.% based on the total amount of said vinyl phenol-containing polymerization raw material and said vinyl compound defined in Claim 1.

14. The stabilized composition according to Claim 12, wherein the weight ratio of (vinyl phenol):(methanol):(phenolic compounds):(water) is 1:0.03-20:0.01-20:0.01-5.

15. The process according to any one of Claims 1 - 6, wherein said stabilized composition defined in any one of Claims 11 - 14 is directly used as a polymerization raw material.